Europäisches Patentamt

European Patent Office

Office européen des brevets

(11) Veröffentlichungsnummer : **0 100 397**
**B1**

# EUROPÄISCHE PATENTSCHRIFT

(45) Veröffentlichungstag der Patentschrift :
**19.08.87**

(51) Int. Cl.⁴ : **G 11 B 25/06**

(21) Anmeldenummer : **83103656.1**

(22) Anmeldetag : **15.04.83**

(54) Behälter zur Aufnahme einer Magnetbandkassette.

(30) Priorität : 09.06.82 DE 3221761

(43) Veröffentlichungstag der Anmeldung :
15.02.84 Patentblatt 84/07

(45) Bekanntmachung des Hinweises auf die Patenterteilung : 19.08.87 Patentblatt 87/34

(84) Benannte Vertragsstaaten :
AT BE CH DE FR LI

(56) Entgegenhaltungen :
EP-A- 0 077 876
DE-A- 2 713 470
DE-B- 2 658 586
GB-A- 2 091 214
GB-A- 2 092 106

(73) Patentinhaber : GRUNDIG E.M.V. Elektro-Mechanische Versuchsanstalt Max Grundig holländ. Stiftung & Co. KG.
Kurgartenstrasse 37
D-8510 Fürth (DE)

(72) Erfinder : Zöllner, Rainer
Birkenweg 4
D-8501 Dietenhofen (DE)

## Beschreibung

Die Erfindung betrifft einen Behälter zur Aufnahme einer Mini-Magnetbandkassette in einem für eine standardisierte Wendekassette eines bestimmten Videosystems geeigneten Videogerät, wobei die Mini-Kassette aus zwei, in Haupterstreckungsrichtung der Kassette gegeneinander verschiebbaren und in der Ausgangslage verriegelbaren Halbteilen besteht, daß ferner der Behälter zwei symmetrisch zueinander angeordnete Schwenkarme mit Bandführungselementen aufweist, die das in der Ausgangslage befindliche Magnetband der Mini-Kassette hintergreifen und innerhalb des Behälters in eine der standardisierten Kassette entsprechende Lage bringen.

Mit der fortschreitenden Miniaturisierung der Elektronik ist die Größe von Magnetband-Aufzeichnungs- und Wiedergabegeräten in zunehmender Weise von der Größe des Magnetbandträgers abhängig. Da als Magnetbandträger vorzugsweise Kassetten mit zwei nebeneinander angeordneten Bandwickelspulen in den modernen Geräten zur Ton- und Bildaufzeichnung eingesetzt werden, ergibt sich die naheliegende Forderung, daß auch möglichst kleine Kassetten insbesondere bei tragbaren Geräten zu verwenden sind. Bei Heimgeräten hingegen wird vom Benutzer solcher Geräte gewünscht, daß die Kassette von ihrem Bandvolumen her eine möglichst lange Spieldauer ermöglicht. Aus den unterschiedlichen Anforderungen an ein Heim-Videogerät einerseits und an ein tragbares Video-Aufzeichnungsgerät, insbesondere an ein in eine Video-Kamera integriertes Kassettengerät andererseits, ergibt sich eine nur durch einen Kompromiß zu lösende Aufgabe in der Verwendung von zwei unterschiedlichen Kassetten, nämlich einer möglichst kleinen und leichten Kassette für ein tragbares Gerät und einer anderen Kassette mit großer Spieldauer für das Heimgerät. Es ist naheliegend, daß somit sogleich der Wunsch gegeben ist, die kleine Kassette mit der zwangsläufig geringeren Spieldauer auch im Heimgerät abspielen zu können.

Hierfür wurden bereits Ausgleichsstücke vorgeschlagen, die das Einsetzen der kleineren Kassette in ein Heimgerät ermöglichen. Solche Konstruktionen sind jedoch sehr kompliziert, da eine aufwendige Technik zum Antrieb der Wickelspulen mit unterschiedlichen Achsabständen erforderlich ist. Der unterschiedliche Achsabstand ist zwangsläufig durch die unterschiedliche Kassettengröße gegeben. Eine erhebliche Vereinfachung der Anpassung einer Kleinkassette an die Größe einer Standardkassette für ein Heimgerät gleichen Systems ergibt sich bei Verwendung einer Mini-Kassette der eingangs genannten Art, wie sie nach der europäischen Patentanmeldung EP-A-77 876 (zu benicksichtigen nach Art 54 (3)) vorgeschlagen wird. Nach diesem Vorschlag werden die Band-Wickelkörper mit umschließendem Kassetten-Gehäuseteil in Längsrichtung auseinandergezogen, und die Wickelkörperlage der kleineren Kassette kann sich dem veränderten Achsabstand für den Wickelkörperantrieb des Heimgeräts anpassen.

Aufgabe der Erfindung ist es, einen Behälter zur Aufnahme einer ausziehbaren Mini-Kassette obig geschilderter Ausführung zu schaffen, der alle erforderlichen Funktionen erfüllt, um eine Mini-Kassette in einfachster Weise in einem Heimgerät einsetzen zu können, das nach einem für standardisierte Wende-Kassetten geeigneten Videosystem arbeitet.

Die Lösung dieser Aufgabe erfolgt erfindungsgemäß durch die im Anspruchs 1 angegebenen Maßnahmen. Vorteilhafte Weiterbildungen ergeben sich aus den abhängigen Ansprüchen 2-12.

Die Erfindung wird nachfolgend unter Bezugnahme auf die Zeichnungsfiguren beispielsweise erläutert. Es zeigen :

Figur 1   einen Behälter im geschlossenen Zustand,

Figur 2   eine Seitenansicht der Fig. 1,

Figur 3   eine Draufsicht des Behälters in geöffnetem Zustand,

Figur 4   eine Draufsicht ähnlich der Fig. 1, jedoch mit teilweise aufgebrochen gezeichnetem Behälterrahmen.

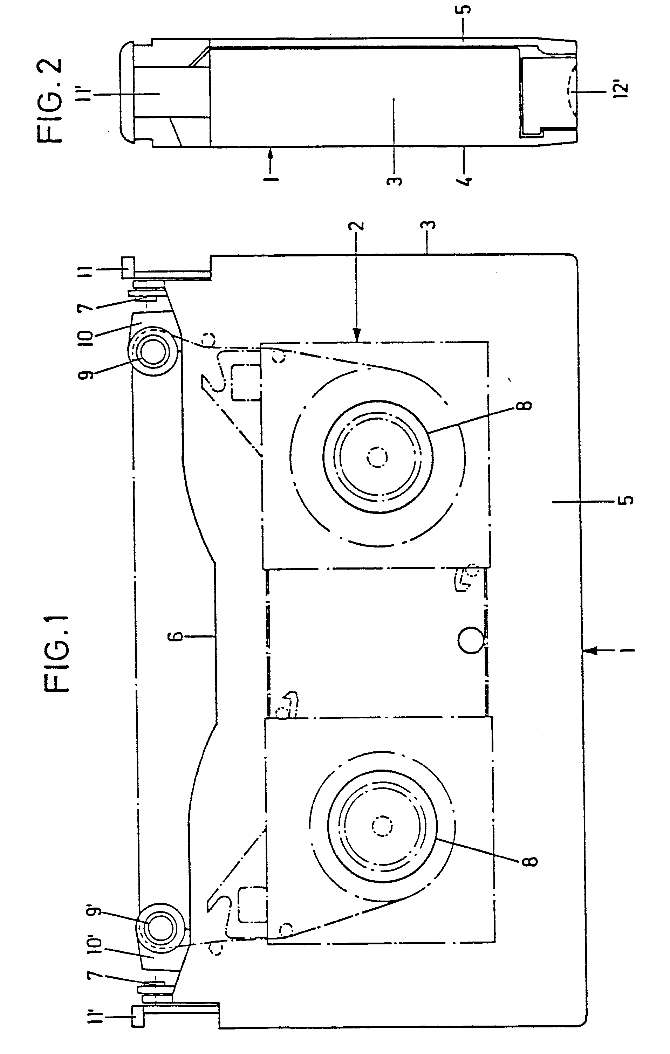

Die Fig. 1 zeigt einen Behälter 1 zur Aufnahme einer MiniMagnetbandkassette 2, die in der dargestellten Figur strichpunktiert eingezeichnet ist. Der Behälter entspricht in seinen äußeren Abmessungen einer standardisierten Wendekassette, die für ein Videogerät eines bestimmten Videosystems geeignet ist. Somit kann eine kleine Kassette für tragbare Geräte in einem Heimgerät, das für eine größere Kassette mit langer Spieldauer geeignet ist, abgespielt werden. Das Magnetband der eingelegten MiniKassette 2 (strichpunktiert in der Figur eingezeichnet) nimmt im Behälter die Ausgangslage ein, die erforderlich ist, um das Magnetband aus der in Heimgeräten erforderlichen Normallage durch geräteeigene Bandtransportmittel aufzunehmen und aus dem Behälter bzw. der Mini-Kassette herauszuziehen. Der Behälter zur Aufnahme der MiniKassette besteht aus einem rechteckigen Rahmenteil 3 mit einer einstückig verbundenen Bodenplatte 4 und einem schwenkbaren Deckel 5. Der Rahmen 3 ist an einer Längsseite 6 durchgehend geöffnet, d. h. aus dieser Seite kann das Magnetband herausgeführt werden. Der Deckel 5 ist an beiden äußeren Seiten über jeweils ein Gelenk 7 mit den kurzen Seitenschenkeln des Rahmens verbunden. In der Bodenplatte 4 und im Deckel 5 des Gehäuses sind deckungsgleich kreisrunde oder elliptische Aussparungen 8 vorhanden, die der Zugänglichkeit und Aufnahme der Wickelspulen einer in den Behälter eingelegten Mini-Kassette dienen. Durch zwei Bandführungselemente 9, 9', von denen je eines auf einem eigenen Schwenkarm 10, 10' angeordnet ist, wird das Magnetband in die der standardisierten Kassette entsprechenden Lagegebracht.

Aus der Fig. 2 ist der Behälter 1 in der Seitenansicht erkennbar und zeigt den Rahmen 3 mit Bodenplatte 4 und den über den Rahmen greifenden Deckel 5. Seitlich des Rahmens und an der geöffneten Längsseite 6 des Behälters befindet sich auf jeder Seite ein Sperrschieber 11, 11' und an der gegenüberliegenden geschlossenen Längsseite des Rahmens an beiden Außenseiten ein in Längsrichtung herausziehbarer Seitenschieber 12, 12'.

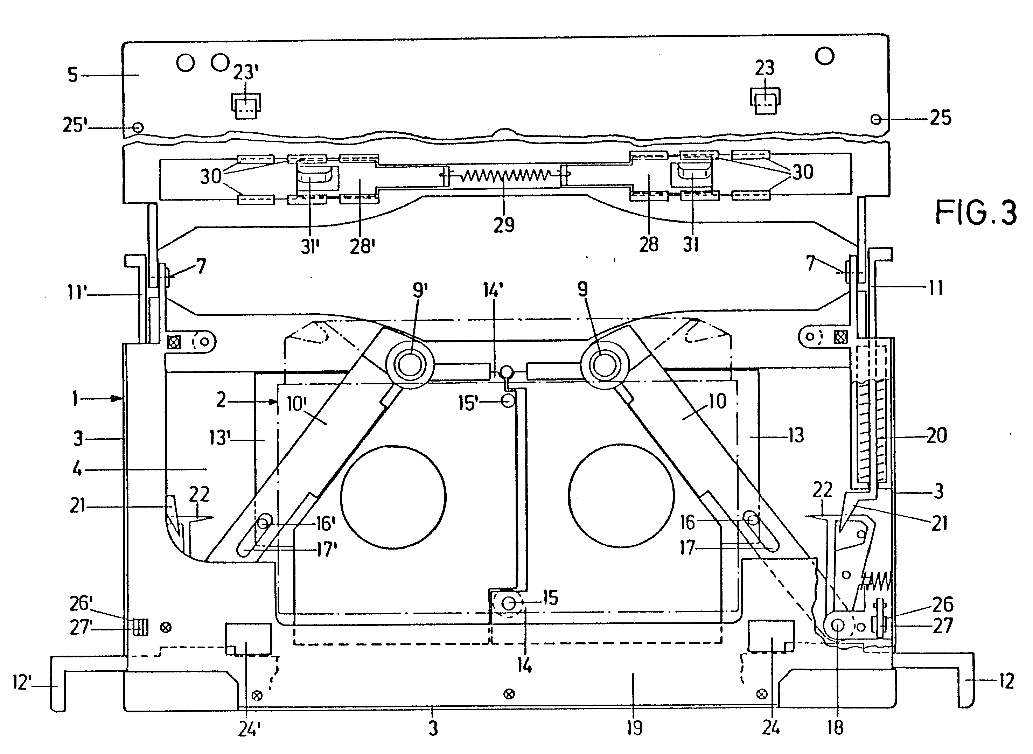

Die Fig. 3 zeigt den Behälter 1 in geöffnetem Zustand beim Einlegen der geschlossenen Mini-Kassette, deren Lage in ihren Außenkonturen strichpunktiert angedeutet ist. Der Deckel 5 des geöffneten Behälters ist hierbei vollständig zurückgeklappt, und die Mini-Kassette 2 kann somit ohne Schwierigkeiten eingelegt werden. Um jedoch den vorher geschlossenen Behälter 1 zu öffnen, sind die beiden Seitenschieber 12, 12' gleichzeitig aus dem Behälter bis zu einem spürbaren Anschlag herauszuziehen. Die Seitenschieber rasten in der herausgezogenen Lage ein und verbleiben in dieser Stellung. Bei diesem Vorgang wird gleichzeitig die Deckelverriegelung aufgehoben, und der Deckel läßt sich aufklappen oder er wird selbständig mittels einer Drehfeder angehoben. Weiterhin nehmen beim Öffnen des Behälters die Bandführungselemente 9, 9', die auf den ihnen zugeordneten Schwenkarmen 10, 10' gelagert sind, die nach innen eingeschwenkte für das Einlegen der Mini-Kassette erforderliche Ausgangslage ein. Die Steuerung der beiden Schwenkarme 10, 10' wird durch je eine in der Bodenplatte 4 des Behälters eingesetzte Schiebeplatte 13, 13' vorgenommen. Die beiden Schiebeplatten sind beidseitig an ihren Längsseiten im Boden geführt und weisen etwa in ihrer Mitte je eine Aussparung für die Aufnahme der Kassetten-Wickelspulen auf, wobei die Wickelspulen mit einem Führungsflansch in die Aussparungen eingreifen. Unmittelbar bei der inneren Stoßstelle der beiden Schiebeplatten sind an den Außenseiten 14, 14' übergreifende Ausklinkungen und Vorsprünge derart vorhanden, daß auf diesen je ein Zentrierstift 15, 15' auf der Mittellinie des Behälters anzuordnen ist. Die Zentrierstifte dienen der exakten Lagebestimmung beim Einlegen einer Mini-Kassette in den Behälter und entriegeln hierbei gleichzeitig die beiden Kassetten-Halbteile. Die Seitenschieber sind jeweils mit der gegenüberliegenden Schiebeplatte in Eingriff, so daß z. B. beim Herausziehen des nach Zeichnung rechten Seitenschiebers 12 die linke Schiebeplatte 13' zur Mitte in die Ausgangslage geschoben wird und umgekehrt. Beide Schiebeplatten weisen je einen Mitnahmezapfen 16, 16' auf, der in einen Längsschlitz 17, 17' des der jeweiligen Schiebeplattenseite zugeordneten Schwenkarm greift. Die Schwenkarme sind über je einen Lagerzapfen 18, der im Rahmen 3 des Behälters angeordnet ist, drehbar gelagert. Der rechteckige Rahmen 3 ist mit einer Teil-Abdeckung 19 verschlossen. Auf der rechten Seite der dargestellten Figur ist am kürzeren Schenkel des rechteckigen Rahmenteils 3 die Teilabdeckung 19 aufgebrochen gezeichnet und läßt somit einen inneren Teil des Rahmens erkennen. Der hierdurch in seiner gesamten Funktion erkennbare und beidseitig angeordnete Sperrschieber 11 mit Druckfeder 20 taucht beim Einsetzen des Behälters in ein Heimgerät in den Rahmen 3 des Gehäuses ein und betätigt über eine Anlaufschräge 21 eine Sperrklinke 22, die auf dem Lagerzapfen 18 zusammen mit dem Schwenkarm 10 gelagert ist. Hierbei wird die Sperrklinke 22 aus dem Eingriff der Wickelspulen einer im Behälter befindlichen Mini-Kassette genommen, und die Wickelspule ist für den Antrieb freigegeben. Der Deckel 5, der aus Gründen einfacher Darstellung in abgebrochener Form gezeichnet ist, weist auf der vom Drehpunkt des Gelenks 7 abgewandten inneren Seite zwei symmetrisch angeordnete Rasthaken 23, 23' auf, die zur Verriegelung des Deckels durch die Seitenschieber im geschlossenen Zustand des Behälters dienen. Die Rasthaken 23, 23' greifen zu diesem Zweck in zugeordnete rechteckige Ausschnitte 24, 24' des Rahmens 3 bzw. der Teilabdeckung 19. Die Seitenschieber werden beim Schließen des Deckels durch zwei in der Nähe der Rasthaken beidseitig im Deckel angebrachte senkrecht abstehende Stifte 25, 25' ausgelöst, sobald die Stifte beim Deckelschließvorgang in die dem Rahmen zugeordnete Ausbrüche 26, 26' eintauchen, werden hierdurch die die Seitenschieber sperrenden Rastklinken 27, 27' ausgelöst. Weiterhin befinden sich im Inneren des Deckels zwei Entriegelungsschieber 28 und 28', die über eine Zugfeder 29 gekoppelt und in Längsführungen 30 gelagert sind. Die Entriegelungsschieber 28, 28' weisen Riegelnasen 31, 31' auf, die jeweils beim Schließen des Deckels in je einen Ausschnitt im Halbteil einer im Gehäuse eingelegten MiniKassette eingreifen und die der Mini-Kassette zugeordnete eigene Spulenverriegelung aufheben. Die Entriegelungsschieber 28, 28' bewegen sich mit den ausziehbaren oder zusammensteckbaren Halbteilen der Mini-Kassette mit.

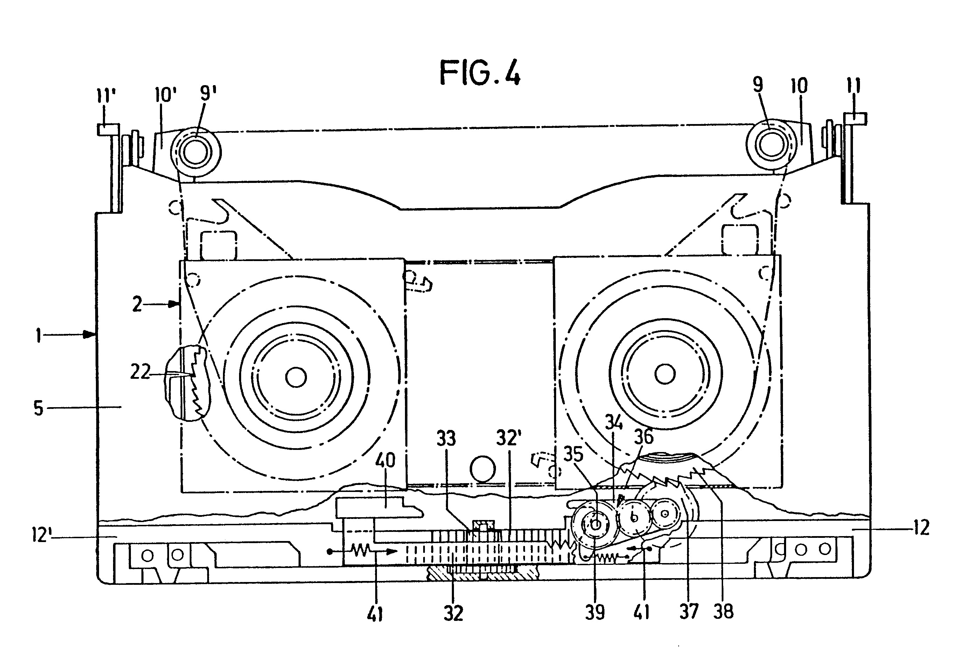

Aus der Fig. 4 ist der die Seitenschieber aufnehmende, dem freien Bandaustritt gegenüberliegende Rahmenteil aufgebrochen dargestellt, wobei das Gehäuse im geschlossenen Zustand gezeichnet, und die eingelegte Mini Kassette strichpunktiert angedeutet ist. Die beiden Seitenschieber 12, 12' weisen im inneren Rahmenteil des Gehäusebereichs ein als Zahnstange 32, 32' ausgebildeten Teil auf, der sich auf unterschiedlicher Ebene überschneidet und die beiden Zahnstangenteile gemeinsam in Eingriff zu einem etwa in der Mitte des unteren Rahmenteils fest gelagerten Koppelzahnrad 33 stehen. Hierdurch wird erreicht, daß beide Seitenschieber bei Betätigung gleichzeitig gleiche Wegstrecken zurücklegen bzw. auch bei Betätigung von nur einem Seitenschieber die mit diesen verbundenen Schiebeplatten 13, 13' und Schwenkarme 10, 10' immer gleichzeitig und in gleicher Weise verschwenkt werden. Das den Zahnstangenteil der Seitenschieber verbindende Koppelzahnrad 33 weist eine Dämpfungseinrichtung auf, die nur in einer Drehrichtung wirkt. Das nach Lage der Zeichnung mit der rechten Schiebeplatte 13 verbundene Zahnstangenteil des linken Seitenschiebers 12′ trägt eine Lagerplatte 34, die auf einer Drehachse 35 gelagert und teilweise schwenkbar ist. Auf der Lagerplatte ist ein Getriebe 36 angeordnet, das über ein Mitnahmerad 37 in Eingriff zu einem mit einer Sägeverzahnung versehenem Spulenflansch 38 eines Wickelkörpers der eingelegten Mini-Kassette bringbar ist.

Das Getriebe 36 besteht aus einem Doppelzahnrad 39, das über eine Zahnradstufe mit dem Zahnstangenteil des rechten Seitenschiebers 12 in Eingriff ist und mit der anderen Zahnradstufe über ein Zwischenrad ein weiteres Doppelzahnrad antreibt, das als Mitnahmerad 37 für den Spulenflansch 38 der Mini-Kassette ausgebildet ist. Die Lagerplatte 34 und somit das Getriebe 36 wird durch eine Zugfeder in Eingriffsstellung gebracht. Das Getriebe, d. h. das Mitnahmerad 37 und der verzahnte Spulenflansch 38 der Mini-Kassette bleibt solange in Eingriff, bis durch den Öffnungsvorgang des Behälters die Mini-Kassette nahezu ihre zusammengefügte Ausgangslage erreicht hat. Kurz vor dem Verriegeln der beiden Kassetten-Halbteile der Mini-Kassette stößt ein auf dem rechten Seitenschieber 12 bzw. Zahnstangenteil angebrachter Abheber 40 auf die Lagerplatte 34 des Getriebes und hebt den Eingriff des Mitnahmerades 37 in den Spulenflansch 38 der Mini-Kassette auf. Die beiden Seitenschieber 12, 12′ sind mit einer Zugfeder 41 verbunden. Diese Zugfeder wirkt als Kraftspeicher, der durch das Herausziehen der Seitenschieber aufgezogen wird und Sorge trägt, daß beim Schließen des Deckels alle erforderlichen Bewegungsfunktionen automatisch ablaufen.

In einer kurzen Zusammenfassung werden die einzelnen Handhabungen und Funktionsabläufe nochmals erläutert. Der Gehäusedeckel des Behälters läßt sich erst öffnen, nachdem die beiden Seitenschieber herausgezogen sind. Diese rasten in ihren Endstellungen ein, und der Deckel des Gehäuses kann geöffnet werden. Die Mini-Kassette kann in den Behälter eingelegt werden. Führungsnasen an der Mini-Kassette sorgen für die richtige Lage der Kassette im Behälter. Beim Einlegen der Kassette tauchen die im Gehäuse befindlichen Zentrierstifte in die Kassette ein und entriegeln die beiden Halbteile der Kassette. Hierbei werden gleichzeitig die Halbteile der Kassette auf den Schiebeplatten verankert.

Wird nun der Deckel des Behälters geschlossen, tauchen die Riegelnasen der Entriegelungsschieber im Deckel in entsprechende Ausnehmungen in die Mini-Kassette ein und lösen die Wickelspulenverriegelung der Kassette. Gleichzeitig werden die Seitenschieber entriegelt und mittels Kraftspeicher im Gehäuse die Halbteile der Mini-Kassette auseinandergezogen und auf den erforderlichen Achsabstand, der für den Bandwickelantrieb im Heimgerät erforderlich ist, gebracht. Die Schwenkarme mit den Bandführungselementen bringen das Magnetband gleichzeitig in die nach der Standardkassette erforderliche Lage. Dieser Gesamtvorgang läuft durch entsprechende Vorkehrung gedämpft ab. In der auseinandergezogenen Endstellung der Kassetten-Halbteile und des Magnetbandes greifen auf beiden Seiten durch einen Schlitz in den Halbteilen der Kassette die Sperrklinken der Sperrschieber und verhindern das Lockerwerden des Magnetbandes. Der Behälter mit der Mini-Kassette kann nun wie eine Standard-Wendekassette für das Heimgerät gehandhabt werden. Beim Einführen des Behälters in das Heimgerät wird die Verriegelung der Wickelspulen durch die im Behälter befindliche Sperrklinke aufgehoben, und das Magnetband ist frei.

Soll die Mini-Kassette wieder aus dem Behälter genommen werden, so sind die Seitenschieber herauszuziehen. Bei diesem Vorgang wird zusätzlich zu den übrigen nur umkehrbaren Funktionsabläufen das Getriebe mit einem Mitnahmerad an einen Spulenflansch mit Verzahnung des Spulenkörpers der Mini-Kassette herangeführt und in Eingriff gebracht. Während des Vorgangs des Auseinanderziehens der Seitenschieber wird das Getriebe durch Eingriff in ein Zahnstangenteil eines Seitenschiebers angetrieben und spult somit das überschüssige Magnetband, das sich durch das Zusammenschieben der beiden KassettenHalbteile ergibt, auf. Durch den Abheber wird vor Öffnen des Deckels das Getriebe wieder in seine Ausgangslage zurückgeführt und dort verankert. Gleichzeitig wird die Rastklinke der Deckelverriegelung aufgehoben, der Deckel kann geöffnet und die Mini-Kassette entnommen werden.

**Patentansprüche**

1. Behälter zur Aufnahme einer Mini-Magnetbandkassette in einem für eine standardisierte Wendekassette eines bestimmten Videosystems geeigneten Videogerät, wobei die Mini-Kassette aus zwei, in Haupterstreckungsrichtung der Kassette gegeneinander verschiebbaren und in der Ausgangslage verriegelbaren Halbteilen besteht, daß ferner der Behälter zwei symmetrisch zueinander angeordnete Schwenkarme mit Bandführungselementen aufweist, die das in der Ausgangslage befindliche Magnetband der Mini-Kassette hintergreifen und innerhalb des Behälters in eine der standardisierten Kassette entsprechende Lage bringen, mit der Kombination folgender weiterer Merkmale :

a) der Behälter (1) weist eine zum Wenden geeignete und der standardisierten Kassette angepaßte symmetrische Außenkontur auf und besteht aus einem rechteckigen Rahmen (3) mit einer einstückig verbundenen Bodenplatte (4) und einem schwenkbaren Deckel (5), wobei der Rahmen an einer Längsseite durchgehend geöffnet ist,

b) in der Bodenplatte (4) und im Deckel (5) sind Aussparungen vorhanden, die jeweils der Zugäng-

lichkeit und Aufnahme der Wickelspulen über einen Führungsflansch der eingelegten Mini-Kassette (2) dienen, wobei

c) in der Bodenplatte (4) die Aufnahme der KassettenWickelspulen über zwei eingesetzte Schiebeplatten (13, 13') erfolgt, und die Schiebeplatten Zentrierstifte (15, 15') zur Aufnahme der Mini-kassette aufweisen ;

d) in den Rahmen (3) auf der geschlossenen Längsseite an beiden Außenseiten sind in Längsrichtung herausziehbare Seitenschieber (12, 12') eingesetzt die in Wirkverbindung mit einem Zahnstangentrieb (32, 32', 33), den Schiebeplatten und den ebenfalls im Behälter eingesetzten Schwenkarmen (10, 10') nach Schließen des Deckels die Wickelspulen und das Magnetband der Mini-Kassette (2) automatisch in die gewünschte Lage gemäß der Standard-Kassette bringen oder durch Herausziehen der Seitenschieber (12, 12') aus dem Behälter in die Ausgangslage zurückführen.

2. Behälter nach Anspruch 1, dadurch gekennzeichnet, daß je ein Zentrierstift (15, 15') senkrecht und gegenüberliegend auf den Schiebeplatten (13, 13') angeordnet ist, die der Zentrierung und der Entriegelung der Halbteile der in den Behälter eingelegten und ausziehbaren Mini-Kassette dienen.

3. Behälter nach den Ansprüchen 1 und 2, dadurch gekennzeichnet, daß nach Schließen des Behälters der Deckel verriegelt und erst nach Herausziehen der Seitenschieber entriegelt ist.

4. Behälter nach den Ansprüchen 1 bis 3, dadurch gekennzeichnet, daß durch Herausziehen der Seitenschieber ein Kraftspeicher aufgezogen wird, der durch Schließen des Deckels auslösbar ist.

5. Behälter nach den Ansprüchen 1 bis 4, dadurch gekennzeichnet, daß der Kraftspeicher über ein beim Öffnen des Deckels betätigbaren Mechanismus aufgezogen wird.

6. Behälter nach den Ansprüchen 1 bis 5, dadurch gekennzeichnet, daß der Kraftspeicher vorzugsweise eine Zugfeder ist.

7. Behälter nach den Ansprüchen 1 bis 6, dadurch gekennzeichnet, daß jeder der beiden Seitenschieber mit der der Bedienungsseite gegenüberliegenden Schiebeplatte in Eingriff steht und daß jede Schiebeplatte einen Mitnehmerzapfen (16, 16') aufweist, der in einen Längsschlitz (17, 17') des der jeweiligen Seite zugeordneten Schwenkarms (10, 10') greift.

8. Behälter nach den Ansprüchen 1 bis 7, dadurch gekennzeichnet, daß der Deckel zwei Entriegelungsschieber (28, 28') zum Lösen der Verriegelung der in der eingelegten Mini-Kassette gesperrten Spulenkörper aufweist.

9. Behälter nach den Ansprüchen 1 bis 8, dadurch gekennzeichnet, daß ein mit den Seitenschiebern (12, 12') beim Öffnen des Behälters (1) in Eingriff stehendes Getriebe (36) in Eingriff zu einem Wickelflansch eines Wickelkörpers der eingelegten Mini-Kassette bringbar ist und eine kurze Bandlänge auf den Wickelkörper aufspult.

10. Behälter nach den Ansprüchen 1 bis 9, dadurch gekennzeichnet, daß die Seitenschieber im herausgezogenen Zustand verriegelt und durch Schließen des Deckels auslösbar sind.

11. Behälter nach den Ansprüchen 1 bis 10, dadurch gekennzeichnet, daß der Behälter eine Einrichtung (11, 20, 21) aufweist, die die Wickelspulen der eingelegten und ausgezogenen Mini-Kassette sperren, und die Sperrung erst durch Einbringen des Behälters in ein Videogerät aufgehoben ist.

12. Behälter nach Anspruch 11, dadurch gekennzeichnet, daß die Einrichtung zur Sperrung der Mini-Kassetten-Wickelspulen aus einem auf beiden Seiten am kurzen Schenkel des rechteckigen Rahmens angeordneten, in den Behälter eintauchbaren Sperrschieber (11, 11') mit in Eingriff stehender getrennter Sperrklinke (22) und einer auf dem Sperrschieber einwirkenden Druckfeder (20) besteht.

**Claims**

1. Adapter for a mini magnetic tape cassette in a video recorder suitable for a standardized double-sided cassette of a certain video system, the minicassette consisting of two halves which can be mutually displaced in the main direction of extent of the cassette and can be locked in the initial position, in that furthermore the adapter has two symmetrically arranged swinging arms with tape guidance elements which reach behind the magnetic tape of the minicassette in the initial position and bring it within the adapter into a position corresponding to the standardized cassette, with the combination of the following further features :

a) the adapter (1) has a symmetrical outer contour suitable for turning over and adapted to the standardized cassette, and consists of a rectangular frame (3) with an integrally connected base plate (4) and a hinged cover (5), the frame being continuously open along one longitudinal side,

b) in the base plate (4) and in the cover (5) there are recesses, which in each case serve the accessibility and reception of the spools via a guide flange of the loaded minicassette (2),

c) reception of the cassette spools in the base plate (4) taking place via two inserted slide plates (13, 13') and the slide plates having centring pins (15, 15') for reception of the minicassette ;

d) lateral slides (12, 12'), which can be extracted longitudinal direction, being inserted on both external sides into the frame (3) on the closed longitudinal side, which lateral slides, after closing of the cover, acting in effective connection with a rack-and-pinion drive (32, 32', 33), the slide plates and the swinging arms (10, 10') likewise inserted in the adapter, bring the spools and the magnetic tape of the minicassette (2) automatically into the desired position according to the standard cassette or, by extraction of the lateral slides (12, 12'), take it back from the adapter to the initial position.

2. Adapter according to Claim 1, characterized in that there is in each case one centring pin (15, 15') arranged vertically and oppositely on the slide plates (13, 13'), which serve the centring and disengagement of the halves of the minicassette which has been loaded in the adapter and can be extracted.

3. Adapter according to Claims 1 and 2, characterized in that, after closing of the adapter, the cover is locked and is only disengaged after extraction of the lateral slides.

4. Adapter according to Claims 1 to 3, characterized in that extraction of the lateral slides causes a force accumulator to be wound up, which can be released by closing the cover.

5. Adapter according to Claims 1 to 4, characterized in that the force accumulator is wound up via a mechanism which can be actuated by opening the cover.

6. Adapter according to Claims 1 to 5, characterized in that the force accumulator is preferably a tension spring.

7. Adapter according to Claims 1 to 6, characterized in that each of the lateral slides is in engagement with the slide plate opposite the operating side and in that each slide plate has a driver pin (16, 16'), which reaches into a longitudinal slot (17, 17') of the swinging arm (10, 10') assigned to the respective side.

8. Adapter according to Claims 1 to 7, characterized in that the cover has two disengagement slides (28, 28') for releasing the blocking of the spool elements blocked in the loaded minicassette.

9. Adapter according to Claims 1 to 8, characterized in that a gear (36) in engagement with the lateral slides (12, 12') when the adapter (1) is opened can be brought into engagement with a winding flange of a winding element of the loaded minicassette and winds a short length of tape onto the winding element.

10. Adapter according to Claims 1 to 9, characterized in that the lateral slides are blocked in the extracted state and can be released by closing the cover.

11. Adapter according to claims 1 to 10, characterized in that the adapter has a device (11, 20, 21) which blocks the spools of the loaded and extracted minicassette and the blocking is only cleared by introducing the adapter into a video recorder.

12. Adapter according to claim 11, characterized in that the device for blocking the minicassette spools consists of a blocking slide (11, 11'), which is arranged on both sides on the short member of the rectangular frame and can enter into the adapter, with separate pawl (22) in engagement, and of a compression spring (20) acting on the blocking slide.

**Revendications**

1. Adaptateur destiné à recevoir une mini-cassette à bande magnétique dans un appareil vidéo fonctionnant avec une cassette standard réversible d'un système vidéo déterminé, la mini-cassette comportant deux moitiés pouvant se déplacer l'une par rapport à l'autre dans la direction principale d'extension de la cassette et verrouillées en position initiale, l'adaptateur présentant en outre deux bras basculants symétriques l'un par rapport à l'autre avec éléments de guidage de la bande qui saisissent la bande magnétique se trouvant en position initiale, de la mini-cassette et l'amènent à l'intérieur de l'adaptateur dans une position correspondant à la cassette standard, présentant la combinaison des autres caractéristiques suivantes :

a) l'adaptateur (1) présente un contour extérieur symétrique, adapté à la cassette standard et permettant le retournement de la cassette, et comporte un châssis (3) rectangulaire avec une plaque de fond (4) assemblée en une seule pièce et un couvercle (5) articulé, le châssis étant entièrement ouvert sur l'un de ses grands côtés,

b) dans la plaque de fond (4) et le couvercle (5) sont pratiqués des évidements qui permettent l'accès aux bobines et leur servent de logement, par un flasque de guidage de la mini-cassette (2) insérée,

c) la mise en place des bobines de la cassette dans la plaque de fond (4) s'effectuant par deux plaques coulissantes (13, 13') insérées, et les plaques coulissantes présentant des ergots de centrage (15, 15') pour la mise en place de la mini-cassette,

d) aux deux extrémités extérieures du grand côté fermé du châssis (3) sont montés des coulisseaux latéraux (12, 12') extensibles en direction longitudinale qui, coopérant avec un mécanisme à crémaillère (32, 32', 33), les plaques coulissantes et les bras pivotants (10, 10') également montés dans l'adaptateur, amènent automatiquement, après fermeture du couvercle, les bobines et la bande magnétique de la mini-cassette (2) dans la position souhaitée, conformément à celle de la cassette standard, ou après déploiement des coulisseaux latéraux (12, 12') de l'adaptateur, les replacent en position initiale.

2. Adaptateur selon la revendication 1, caractérisé en ce qu'un ergot de centrage (15, 15') est disposé perpendiculairement et en vis-à-vis sur chacune des plaques coulissantes (13, 13') qui assure le centrage et le déverrouillage des moitiés pouvant être écartées de la mini-cassette insérée dans l'adaptateur.

3. Adaptateur selon les revendications 1 et 2, caractérisé en ce qu'après fermeture de l'adaptateur, le couvercle est verrouillé et n'est déverrouillé qu'après déploiement des coulisseaux latéraux.

4. Adaptateur selon la revendication 1 à 3, caractérisé en ce que l'extraction des coulisseaux latéraux a pour effet de remonter un accumulateur d'énergie qui est libéré par fermeture du couvercle.

5. Adaptateur selon les revendications 1 à 4, caractérisé en ce que l'accumulateur d'énergie est remonté par un mécanisme actionné par l'ouverture du couvercle.

6. Adaptateur selon les revendications 1 à 5, caractérisé en ce que l'accumulateur d'énergie est de préférence un ressort de traction.

7. Adaptateur selon les revendications 1 à 6, caractérisé en ce que chacun des deux coulisseaux latéraux est en prise avec la plaque coulissante opposée au côté d'utilisation et en ce que chaque plaque coulissante présente un doigt d'entraînement (16, 16') qui s'engage dans une fente longitudinale (17, 17') du bras basculant (10, 10') associé au côté considéré.

8. Adaptateur selon les revendications 1 à 7, caractérisé en ce que le couvercle présente deux coulisseaux de déverrouillage (28, 28') destinés à libérer le verrouillage des bobines bloquées dans la mini-cassette insérée.

9. Adaptateur selon les revendications 1 à 8, caractérisé en ce qu'un engrenage (36) en prise avec les coulisseaux latéraux (12, 12') lors de l'ouverture de l'adaptateur (1), peut être amené en prise avec un flasque d'un corps de bobinage de la mini-cassette inserée et enroule une courte longueur de bande sur le corps de bobinage.

10. Adaptateur selon les revendications 1 à 9, caractérisé en ce que les coulisseaux latéraux sont verrouillés lorsqu'ils sont extraits et peuvent être libérés par fermeture du couvercle.

11. Adaptateur selon les revendications 1 à 10, caractérisé en ce que l'adaptateur présente un dispositif (11, 20, 21) qui bloque les bobines de la mini-cassette insérée et en état écarté, et en ce que le blocage n'est supprimé qu'après mise en place de l'adaptateur dans un appareil vidéo.

12. Adaptateur selon la revendication 11, caractérisé en ce que le dispositif de blocage des bobines de la mini-cassette comporte un coulisseau de blocage (11, 11') disposé de part et d'autre du petit côté du châssis rectangulaire, pouvant pénétrer dans l'adaptateur, en prise avec un cliquet de blocage (22) séparé, ainsi qu'un ressort de pression (20) agissant sur le coulisseau de blocage.

# FIG.1

# FIG. 2

0 100 397

FIG.3

0 100 397

# FIG.4

0 100 397